# EUROPEAN PATENT APPLICATION

(11) **EP 1 640 222 A1**
(43) Date of publication of application: **29.03.2006**
(21) Application number: 05018700.4
(22) Date of filing: 29.08.2005
(51) Int. Cl.: B60R 21/16

(54) **Curtain airbag arrangement structure**

(30) Priority: 28.09.2004 JP 2004281708
(71) Applicant: Mazda Motor Corporation, Aki-gun, Hiroshima (JP)
(72) Inventor: Wahara, Sachio, Aki-gun Hiroshima (JP); Yamanishi, Mitsutoshi, Aki-gun Hiroshima (JP); Hirata, Motoharu, Aki-gun Hiroshima (JP); Ohmori, Tomohisa, Aki-gun Hiroshima (JP); Kodama, Kazuhisa, Aki-gun Hiroshima (JP); Hidaka, Shouichirou, Aki-gun Hiroshima (JP); Sugimura, Yuichi, Aki-gun Hiroshima (JP); Watanabe, Tsutomu, Aki-gun Hiroshima (JP); Fukutani, Kazuya, Aki-gun Hiroshima (JP); Miyamura, Nobuo, Aki-gun Hiroshima (JP); Oda, Yoshio, Aki-gun Hiroshima (JP); Funahashi, Ryoji, Aki-gun Hiroshima (JP)
(74) Representative: Herrmann, Uwe

(57) **Abstract**

Disclosed is an arrangement structure for a curtain airbag, which comprises a bracket plate 20 for attaching a curtain airbag to a vehicle body inner panel 1 b, and a pillar trim 30 formed with a trim engagement-plate potion 31 in the vicinity of an upper end thereof. The trim engagement-plate potion 31 has a trim engagement surface 32 oriented toward a vehicle interior space in an orthogonal direction relative thereto. The bracket plate 20 is formed with a bracket engagement-plate portion 21 having a bracket engagement surface 22 which is disposed on the side of the vehicle interior space relative to the trim engagement surface 32 and in adjacent and opposed relation to the trim engagement surface 32 without contact with the trim engagement surface 32 when a vehicle 1 has no side-impact collision, and adapted to come into contact with the trim engagement surface 32 in conjunction with a displacement of the trim engagement-plate potion 31 in the upward or inward direction of the vehicle interior space during a side-impact collision against the vehicle 1.

## Description

### TECHNICAL FIELD

The present invention relates to a curtain airbag arrangement structure for a vehicle, and more particularly to a curtain airbag arrangement structure allowing an airbag cushion to be reliably deployed without causing interference with a pillar trim during a side-impact vehicle collision, in a simplified structure.

### BACKGROUND ART

Heretofore, in order to absorb a shock to occupant's head, shoulder and lumbar regions during a side-impact vehicle collision, a curtain airbag having an airbag cushion to be inflated (deployed) between an occupant and a vehicle side door or enter pillar in a curtain-like manner has been put to practical use. This curtain airbag is disposed on the inner side of an inner panel of a vehicle body and along a roof side rail, and designed such that, during a side-impact vehicle collision, the airbag cushion is deployed in the downward direction of a vehicle interior space by a pressurized air generated from an inflator.

In a curtain airbag disclosed in the following Patent Publication 1 (Japanese Patent Laid-Open Publication No. 2002-362286), an airbag cushion is mounted in the vicinities of respective upper ends of center and rear pillars on the side of inner surfaces thereof, through individual brackets. The bracket in a region of the center pillar is fixed to a center pillar inner panel, and the bracket in a region of the rear pillar is fixed to a roof inner panel. The bracket fixed to the center pillar inner panel is formed with a convex portion having a trapezoidal shape in section and protruding in the inward direction of a vehicle interior space, and the airbag cushion is disposed adjacent to and on the upper side of the concave portion.

Two engagement holes are formed in a bottom wall of the convex portion, and two L-shaped engagement pawls are integrally formed on an inner surface of a center pillar garnish in the vicinity of the upper end thereof. This structure is designed such that, when a lower end portion of a roof garnish is brought into contact with a top surface of the convex portion, and an upper end portion of the center pillar garnish is brought into contact with an inner surface of the roof garnish, respective edges of the two engagement pawls formed on the center pillar garnish are fitted, respectively, into the two engagement holes formed in the bracket, from underneath.

In a curtain airbag disclosed in the following Patent Publication 2 (Japanese Patent No. 3481473), for example, as shown in FIG. 1 of the Patent Publication 1, an airbag bag element is attached on an inner surface of a rail inner panel through a diving platform-like member having an L shape in section. The diving platform-like member has a bottom wall formed as a guide wall for guiding the airbag bag element during deployment thereof, and an engagement protrusion curved outward in a U shape is formed at a lower edge of the guide wall. Further, a seat protruding outward from an inner surface of a B-pillar garnish in the vicinity of an upper end thereof is integrally formed with a flange located on the obliquely upper and outer side relative to the engagement protrusion, and an engagement hole collision is formed in the flange in such a manner as to allow the engagement protrusion to be engaged therewith during a side-impact vehicle collision.

A lower end portion of roof head lining is located on the inner side of the guide wall, and engaged with a back surface of an upper end portion of the B-pillar garnish. This structure is designed such that, during a side-impact vehicle collision, the engagement protrusion of the guide wall is engaged with the engagement hole of the flange to keep the B-pillar garnish and the guide wall of the diving platform-like member from being largely spaced apart from one another so as to prevent the airbag during deployment from getting stuck with the upper end portion of the B-pillar garnish and being inadequately deployed.

In the curtain airbag disclosed in the Patent Publication 1, even if the center pillar is deformed in the inward or upward direction of the vehicle body during a side-impact vehicle collision, the two engagement pawls of the center pillar garnish are engaged with the two engagement holes of the bracket, and the upper end portion of the center pillar garnish is restricted in being displaced in the inward direction of the vehicle interior space and spaced apart from the bracket. This makes it possible to prevent the airbag cushion from getting stuck with the upper end portion of the B-pillar garnish.

However, this structure is required to establish the engagement between the engagement pawls and the engagement holes in a vehicle assembling process. Thus, if the shape of the center pillar garnish is changed or the strength of the engagement pawl is lowered, due to thermal expansion, thermal contraction and/or aged deterioration, a gap will be formed between the engagement pawl and the engagement hole to generate abnormal noises during vehicle running. While it is conceivable to form the engagement pawl in a relatively large size and fit the engagement pawl into the engagement hole in a close fitting manner, as one measure against this problem, such a measure will raise new problems about poor assembling workability, and deterioration in productivity due to higher accuracy required in forming respective shapes of the engagement pawl and the engagement hole.

The curtain airbag disclosed in the Publication 2 can prevent the occurrence of the above problem, because the engagement protrusion of the diving platform-like member can be held without being engaged with the engagement hole of the flange in a vehicle assembling process. However, the behavior of the B-pillar during a side-impact vehicle collision is not a uniform state, but it is changed in various patterns. In order to reliably bring the engagement protrusion into engagement with the engagement hole even in such various deformed states, it is essential to form the engagement hole in a fairly large size. If not so, it is difficult to achieve a desired function due to occurrence of a failure in engagement of the engagement protrusion with the engagement hole.

### SUMMARY OF THE INVENTION

In view of the above circumstances, it is an object of the present invention to provide a curtain airbag arrangement structure capable of reliably deploying an airbag cushion without causing interference with a pillar trim to obtain a desired deployed state, and achieving this reliable deployment of the airbag cushion in a simplified structure, preventing the occurrence of abnormal noises during vehicle running, and achieving enhanced assembling workability and productivity.

In order to achieve the above object, the present invention provides a curtain airbag arrangement structure which includes an airbag cushion disposed along a roof side rail of a vehicle having a pillar, and adapted to be inflated in a curtain-like manner during a side-impact vehicle collision. The curtain airbag arrangement structure comprises a bracket plate (or attachment plate) for attaching the curtain airbag to a vehicle body panel, and a pillar trim formed with a trim engagement-plate potion in the vicinity of an upper end thereof. The trim engagement-plate potion has a trim engagement surface oriented toward a vehicle interior space in an orthogonal direction relative thereto. In the curtain airbag arrangement structure, the bracket plate is formed with a bracket engagement-plate portion having a bracket engagement surface which is disposed on the side of the vehicle interior space relative to the trim engagement surface and in adjacent and opposed relation to the trim engagement surface without contact with the trim engagement surface when the vehicle has no side-impact collision, and adapted to come into contact with the trim engagement surface in conjunction with a displacement of the trim engagement-plate potion during a side-impact vehicle collision.

According to the curtain airbag arrangement structure of the present invention, the curtain airbag is disposed along the roof side rail, and attached to the vehicle body panel through the bracket plate. The bracket plate is formed with the bracket engagement-plate portion in the vicinity of an upper end of the pillar, and the bracket engagement-plate portion has the bracket engagement surface oriented toward the outside of the vehicle in an orthogonal direction relative thereto. Further, the pillar trim is formed with the trim engagement-plate potion in the vicinity of the upper end thereof, and the trim engagement-plate potion has the trim engagement surface oriented toward the vehicle interior space in an orthogonal direction relative thereto.

Thus, even if the trim engagement-plate portion of the pillar trim is displaced in the upward or inward direction of the vehicle interior space during a side-impact vehicle collision, the trim engagement surface can be brought into contact with the bracket engagement surface to reliably prevent the trim engagement-plate portion from being further displaced.

In a vehicle assembling process, the bracket plate and the pillar trim are incorporated in the vehicle body in such a manner that the bracket engagement surface of the bracket engagement-plate portion is disposed on the side of the vehicle interior space relative to the trim engagement surface and in adjacent and opposed relation to the trim engagement surface in a non-contact manner. Thus, the trim and bracket engagement surfaces are kept in a non-contact state, and thereby abnormal noises will never occur during vehicle running.

In the event of a side-impact vehicle collision, the trim engagement-plate portion is supposedly displaced in the upward or inward direction of the vehicle interior space by an impact force applied to the pillar trim, and the trim engagement surface is brought into contact with the bracket engagement surface in conjunction with the above displacement. When the trim engagement surface is brought into contact with the bracket engagement surface during the side-impact vehicle collision, the trim engagement-plate portion is restricted in being displaced relative to the bracket engagement-plate portion. That is, the bracket engagement-plate portion suppresses a displacement of the pillar trim to a position where the pillar trim obstructs the deployment of the airbag cushion. Thus, during the side-impact vehicle collision, the airbag cushion is reliably deployed without interference with the pillar trim to obtain a desired deployed state.

As above, the curtain airbag arrangement structure of the present invention can suppress a displacement of the pillar trim to a position where the pillar trim obstructs the deployment of the airbag cushion during the side-impact vehicle collision, to allow the airbag cushion to be reliably deployed without interference with the pillar trim so as to obtain a desired deployed state and reliably absorb a shock to occupant's head, shoulder and lumbar regions by the airbag cushion. Further, in a normal state or when the vehicle has no side-impact collision, the trim and bracket engagement surfaces kept in a non-contact state makes it possible to prevent the occurrence of abnormal noises during vehicle running. In a vehicle assembling process, the bracket plate and the pillar trim can be incorporated in the vehicle body in a non-contact manner as descried above to provide enhanced assembling workability. In addition, the trim and bracket engagement-plate portions having no need for high accuracy in shape allow the curtain airbag arrangement structure to be simplified so as to achieve reduced production cost and enhanced productivity.

Other features and advantages of the present invention will be apparent from the accompanying drawings and from the detailed description.

### BRIEF DESCRIPTION OF DRAWINGS

FIG. 1 is a fragmentary side view of a vehicle having a curtain airbag arrangement structure according to a first embodiment of the present invention.
FIG. 2 is a fragmentary side view of the curtain airbag arrangement structure, viewing from a vehicle interior space.
FIG. 3 is a sectional view taken along the line III-III in FIG. 2.
FIG. 4 is a sectional view taken along the line IV-IV in FIG.2.
FIG. 5 is a sectional view taken along the line V-V in FIG. 2.
FIG. 6 is a sectional view corresponding to FIG. 5, wherein an airbag cushion is being deployed.
FIG. 7 is a fragmental vertical sectional view of a curtain airbag arrangement structure according to a second embodiment of the present invention.
FIG. 8 is a fragmental vertical sectional view corresponding to FIG. 7, wherein an airbag cushion is being deployed.

### DETAILED DESCRIPTION OF THE INVENTION

A curtain airbag an arrangement structure of the present invention comprises an airbag cushion disposed along a roof side rail of a vehicle having a pillar, and adapted to be inflated in a curtain-like manner during a side-impact vehicle collision, a bracket plate (or referred to an attachment plate) for attaching the curtain airbag to a vehicle body panel, and a pillar trim formed with a trim engagement-plate potion in the vicinity of an upper end thereof. The trim engagement-plate potion has a trim engagement surface oriented toward a vehicle interior space in an orthogonal direction relative thereto. The bracket plate is formed with a bracket engagement-plate portion having a bracket engagement surface which is disposed on the side of the vehicle interior space relative to the trim engagement surface and in adjacent and opposed relation to the trim engagement surface in a non-contact manner when the vehicle has no side-impact collision, and adapted to come into contact with the trim engagement surface in conjunction with a displacement of the trim engagement-plate potion during a side-impact vehicle collision.

With reference to the drawings, an embodiment of the present invention will be described in detail.

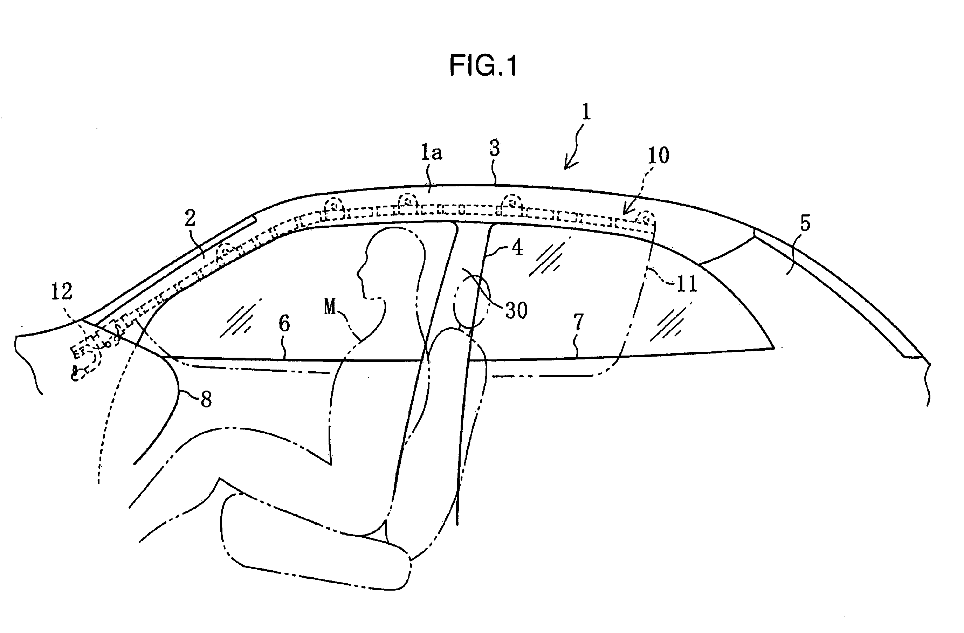

FIGS. 1 to 6 show a curtain airbag arrangement structure according to a first embodiment of the present invention. As shown in FIG 1, a body 1 a of a vehicle (automobile) 1 includes a front pillar 2, a roof side rail 3, a center pillar 4, a rear pillar 5, a front side door 6, a rear side door 7, and an instrument panel 8. The vehicle 1 is equipped with a left-side curtain airbag 10 and a right-side curtain airbag 10. Each of the left-side and right-side curtain airbags 10, 10 has a bilaterally-symmetric structure, and the left-side and right-side curtain airbags are activated simultaneously and individually in response to a side-impact collision (or prediction of a side-impact collision) against the vehicle 1. Thus, the following description will be made in connection with only one of the curtain airbags 10, 10.

As shown in FIGS. 1 to 6, the curtain airbag 10 is disposed along the front pillar 2 and the roof side rail 3. This curtain airbag 10 comprises an airbag cushion 11 placed along the front pillar 2 and the roof side rail 3 in an uninflated and elongatedly folded state, and an inflator 12 fluidically connected to the airbag cushion 11 and adapted to generate a pressurized air in response to a side-impact collision (or prediction of a side-impact collision) against the vehicle 1. The pressurized air generated from the inflator 12 during the side-impact collision against the vehicle 1 is supplied to the airbag cushion 11, and thereby the airbag cushion 11 is inflated (deployed) between the center pillar 4 and the side doors 6, 7 of the vehicle body 1 a in a curtain-like manner as indicated by the two-dot chain line in FIG. 1.

The inflator 12 is disposed in the vicinity of the junction between the front pillar 2 and the instrument panel 8. The inflator 12 is associated with a control device (not shown) composed, for example, of an ECU. This control device is electrically connected with a side-impact detection sensor for detecting a side-impact collision against the vehicle 1 (or a side-impact prediction sensor for predicting a side-impact collision against the vehicle 1), and adapted to control the inflator 12 in accordance with a signal from the side-impact detection sensor. Specifically, in response to detection (or prediction) of a side-impact collision against the vehicle 1, the control device activates the inflator 12 to generate a pressurized air so as to deploy the airbag cushion 11.

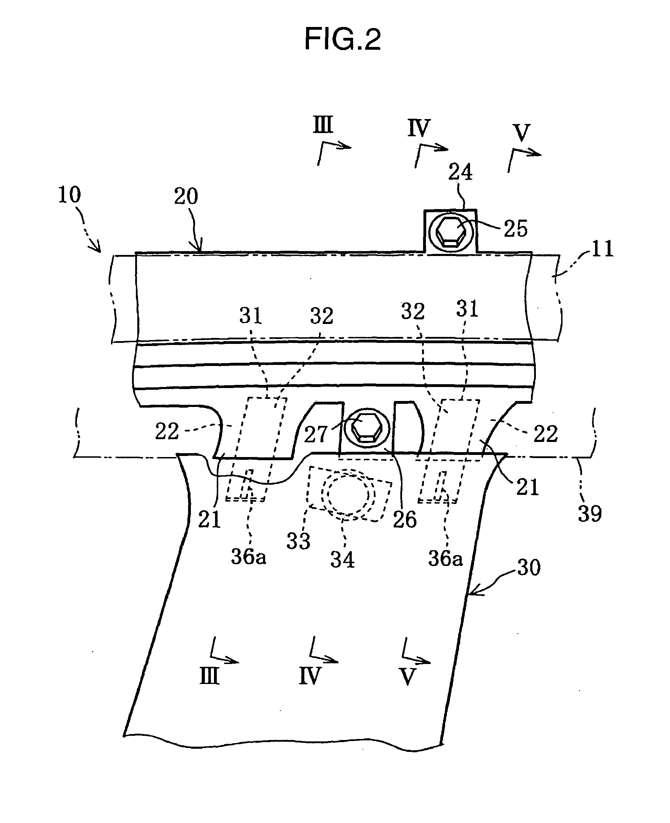

As shown in FIGS. 2 to 6, the curtain airbag arrangement structure includes a bracket plate 20 (or an attachment plate) for attaching the curtain airbag 10 to a vehicle body inner panel 1 b of the front pillar 2 and the roof side rail 3. A pair of front and rear trim engagement-plate portions 31 are formed in a pillar trim 30 for the center pillar 4 in the vicinity of an upper end of the pillar trim 30. Each of the front and rear trim engagement-plate portions 31 has a trim engagement surface 32 oriented toward a vehicle interior space in an orthogonal direction relative thereto. The bracket plate 20 is formed with a pair of front and rear bracket engagement-plate portions 21. Each of the bracket engagement-plate portions 21 has a bracket engagement surface 22 which is disposed on the side of the vehicle interior space relative to a corresponding one of the pair of trim engagement surfaces 32 and in adjacent and opposed relation to the corresponding trim engagement surface 32 without contact with the corresponding trim engagement surface 32 when the vehicle 1 has no side-impact collision, and adapted to come into contact with the corresponding trim engagement surface 32 in conjunction with a displacement of the corresponding trim engagement-plate potion 31 during a side-impact collision against the vehicle 1.

The bracket plate 20 is disposed in a discontinuous manner (or at a plurality of given positions in a discontinuous manner) along the front pillar 2 and roof-side rail 3. The bracket plate 20 has a mounting strip portion 23 positioned approximately vertically, and the curtain airbag 10 is mounted on a surface of the mounting strip portion 23 on the side of the vehicle interior space, in a folded (uninflated) state, and fastened to mounting strip portion 23 in an inflatable manner by an appropriate fastening means. A plurality of upper anchor portions 24 are formed along a longitudinally-extending upper edge of the bracket plate 20 at appropriate intervals, and fixed to the vehicle body inner panel 1 b by bolts 25. The bracket plate 20 also has a lower anchor portion 26 integrally formed between the pair of bracket engagement-plate portions 21, and the lower anchor portion 26 is fixed to the vehicle body inner panel 1b by a bolt 27. Further, a plurality of auxiliary anchor portions are integrally formed, but not shown, along a longitudinally-extending lower edge of the bracket plate 20 at appropriate intervals, and fixed to the vehicle body inner panel 1 b by bolts.

The bracket plate 20 also has a deployment guide portion 28 extending obliquely downward in the inward direction of the vehicle interior space from a lower end of the mounting strip portion 23, and a turn-back portion 29 extending obliquely downward in the outward direction of the vehicle interior space from a lower (distal) end of the deployment guide portion 28. The deployment guide portion 28 and the turn-back portion 29 are disposed along the front pillar 2 and the roof side rail 3. In this embodiment, the deployment guide portion 28 and the turn-back portion 29 are integrally formed with the mounting strip portion 23, and each of the pair of bracket engagement-plate portions 21, the lower anchor portion 26 and the auxiliary anchor portions (not shown) is integrally connected to the turn-back portion 29. The deployment guide portion 28 serves as a means to guide (control) the airbag cushion 11 fastened to the mounting strip portion 23 in the uninflated state in such a manner as to be deployed in an adequate direction.

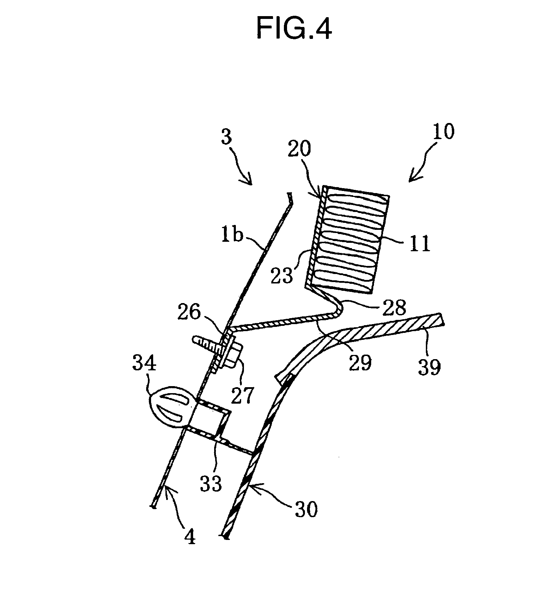

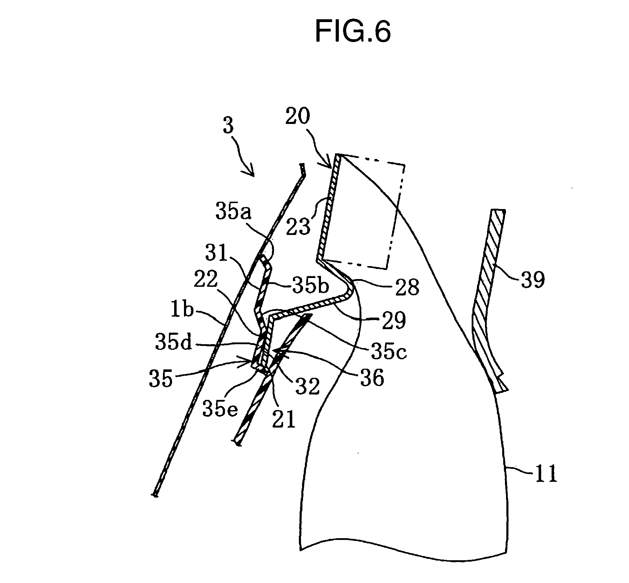

As shown in FIG. 4, the pillar trim 30 is integrally formed with one or more connection portions 33 extending from the body of the pillar trim 30 toward the vehicle body inner panel 1b. Each of the connection portions 33 is connected to the vehicle body inner panel 1 b through a fastener 34 (or any other suitable connecting means) to allow the pillar trim 30 to be fixedly attached to the vehicle body inner panel 1 b, and allow an upper end portion of the pillar trim 30 to be brought into engagement with an end portion of a roof garnish 39 from the side of the vehicle interior space. As shown in FIG. 6, when the airbag cushion 11 is inflated, the inflation force acts to release the engagement between the upper end portion of the pillar trim 30 and the end portion of the roof garnish 39 to form an opening therebetween, and largely deform the roof garnish 39 in the inward direction of the vehicle interior space, so that the airbag cushion 11 is deployed in the downward direction of the vehicle interior space through the formed opening.

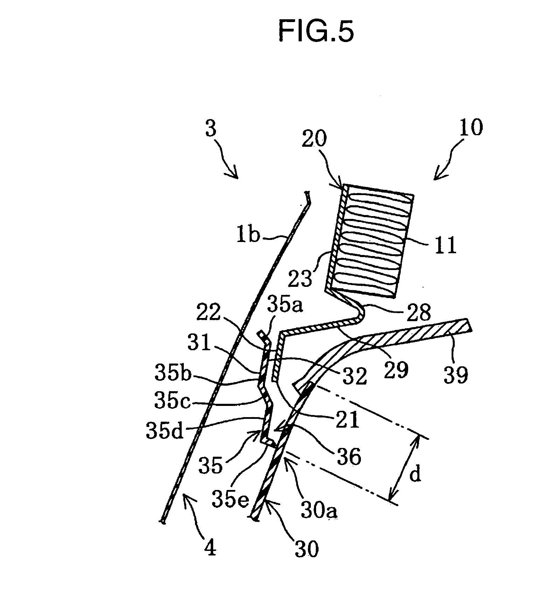

As shown in FIG. 5, the pillar trim 30 is integrally formed with a pair of front and rear engagement members 35 each extending toward the vehicle body inner panel 1 b from a given position 30a downward away from the upper end of the pillar trim 30 by a given distance "d", for example, by a distance slightly greater than each vertical length of the bracket engagement-plate portions 21, and the front and rear trim engagement-plate portions 31 are formed, respectively, in the front and rear engagement members 35. That is, front and rear engagement members 35 and an upper portion of the pillar trim 30 define a pair of front and rear V-shaped engagement portions which allow the pair of trim engagement-plate portions 31 to be brought into contact and engagement with respective edges of the corresponding bracket engagement-plate portions 21 when the pair of trim engagement-plate portions 31 are displaced in the upward or inward direction of the vehicle interior space during a side-impact collision against the vehicle 1. The above distance "d" or the distance between the upper end of the pillar trim 30 and each proximal end 30a of the engagement members 35 is set at a given value or less to minimize the interference between the upper end of the pillar trim 30 and the turn-back portion 29 of the bracket plate 20 during the side-impact collision against the vehicle 1. Further, the pillar trim 30 is disposed to extend in the upward and inward direction of the vehicle interior space.

Each of the engagement members 35 has an inclined distal end region 35a, a first engagement region 35b located in opposed relation to the bracket engagement surface 22 in the normal state or when the vehicle 1 has no side-impact collision, a second engagement region 35c extending obliquely in the inward direction of the vehicle interior space from a lower end of the first engagement region 35b, a third engagement region 35d located approximately immediately below the bracket engagement-plate portion 21, and a connection region 35e connecting between the third engagement region 35d and the pillar trim 30 and adapted to receive the lower end of the bracket engagement-plate portion 21, in this order. These first to third engagement regions 35b to 45d define each of the trim engagement- plate portions 31. Further, the arrangement structure according to this embodiment is designed to orient each of the bracket engagement-plate portions 21 toward the corresponding connection regions 35e so as to allow the bracket engagement-plate portions 21 to be readily engaged with the corresponding connection regions 35e.

Functions/effects of the above curtain airbag arrangement structure will be described below.

In the normal state or when the vehicle 1 has no side-impact collision, the pair of bracket engagement surfaces 22 of the bracket plate 20 is located on the side of the vehicle interior space relative to the pair of trim engagement surfaces 32 of the pillar trim 30 and in adjacent and opposed relation to the pair of trim engagement surfaces 32 in a non-contact manner. In the event of a side-impact collision against the vehicle 1, the inflator 12 generates a pressurized air, and the airbag cushion 11 is inflated by the pressurized air. In this process, the trim engagement-plate portions 31 are supposedly displaced in the upward or inward direction of the vehicle interior space.

When the trim engagement surfaces 32 are brought into contact with the corresponding bracket engagement surfaces 22 in conjunction with the displacement of the trim engagement-plate portions 31 in the upward or inward direction of the vehicle interior space, the displacement of the trim engagement-plate portions 31 in the upward or inward direction of the vehicle interior space is restricted by the bracket engagement-plate portions 21. In particular, if the trim engagement-plate portions 31 are displaced upward, and the trim engagement surfaces 32 are brought into contact with the corresponding bracket engagement surfaces 22, the trim engagement-plate portions 31 are guided by the corresponding bracket engagement-plate portions 21. Then, the connection regions 35e of the engagement members 35 are finally brought into contact with the edges of the corresponding bracket engagement-plate portion 21, and the V-shaped engagement portions 36 are stopped by the edges of the corresponding bracket engagement-plate portion 21. Thus, the trim engagement-plate portions 31 cannot be further displaced relative to the corresponding bracket engagement-plate portion 21.

The above function makes it possible to prevent the pillar trim 30 from being largely displaced and superimposed on a surface of the roof garnish 39 on the side of the vehicle interior space, or to prevent a displacement of the pillar trim 30 to a position where the pillar trim 30 obstructs the deployment of the airbag cushion 11. Thus, during the side-impact collision against the vehicle 1, the airbag cushion 11 inflated by a supplied pressurized air opens the engagement zone between the upper end portion of the pillar trim 30 and the end portion of the roof garnish 39, and largely deforms the roof garnish 39 in the inward direction of the vehicle interior space. Then, the airbag cushion 11 is reliably deployed in the downward direction of the vehicle interior space while being guided by the deployment guide portion 28, to obtain a desired deployed state.

As above, according to the above arrangement structure for the curtain airbag 10, the pillar trim 30 is formed with the trim engagement-plate potions 31 in the vicinity of the upper end thereof, and each of the trim engagement-plate potions 31 has the trim engagement surface 32 oriented toward the vehicle interior space in an orthogonal direction relative thereto. Further, the bracket plate 20 for attaching the curtain airbag 10 to the vehicle body inner panel 1b is formed with the bracket engagement-plate portions 21 each having the bracket engagement surface 22 which is disposed on the side of the vehicle interior space relative to the trim engagement surface 32 and in adjacent and opposed relation to the trim engagement surface 32 in a non-contact manner when the vehicle 1 has no side-impact vehicle collision, and adapted to come into contact with the trim engagement surface 32 in conjunction with a displacement of the trim engagement-plate potion 31 in the upward or inward direction of the vehicle interior space during a side-impact collision against the vehicle 1. Thus, even if the trim engagement-plate portions 31 of the pillar trim 30 are displaced in the upward or inward direction of the vehicle interior space during a side-impact vehicle collision, the trim engagement surfaces 32 can be brought into contact with the corresponding bracket engagement surfaces 22 to reliably prevent the trim engagement-plate portions 31 from being further displaced in the upward or inward direction of the vehicle interior space.

That is, the above curtain airbag arrangement structure can suppress a displacement of the pillar trim 30 to a position where the pillar trim 30 obstructs the deployment of the airbag cushion 11 during the side-impact collision against the vehicle 1, to allow the airbag cushion 11 to be reliably deployed without interference with the pillar trim 30 so as to obtain a desired deployed state and reliably absorb a shock to the head, shoulder and lumbar regions of an occupant M by the airbag cushion 11. Further, in a normal state or when the vehicle 1 has no side-impact collision, the trim and bracket engagement surfaces 32, 22 kept in a non-contact state makes it possible to prevent the occurrence of abnormal noises during running of the vehicle 1. In an assembling process of the vehicle 1, the bracket plate 20 and the pillar trim 30 can be incorporated in the vehicle body 1 a in a non-contact manner to provide enhanced assembling workability. In addition, the trim and bracket engagement-plate portions 31, 21 having no need for high accuracy in shape allow the arrangement structure for the curtain airbag 10 to be simplified so as to achieve reduced production cost and enhanced productivity.

The pillar trim 30 is integrally formed with the engagement members 35 each extending toward the vehicle body inner panel 1 b from the given position 30a of the pillar trim 30 away from the upper end of the pillar trim 30 by the given distance "d", and each of the trim engagement-plate potions 31 is formed in the corresponding engagement member 35. Thus, the surface of the center pillar 4 on the side of the vehicle interior space can be reliably covered by the pillar trim 30, and the trim engagement-plate portions 31 can be formed on a back or hidden surface of the pillar trim 30 (on the side of the vehicle body inner panel 1 b) to achieve the aforementioned effects.

Further, in the first embodiment, each of the two pairs of engagement member 35 and the pillar trim 30 define the V-shaped engagement portion 36 which allows the trim engagement-plate potions 31 to be brought into contact and engagement with respective edges of the corresponding bracket engagement-plate portions 21 when the trim engagement-plate potions 31 are displaced in the upward or inward direction of the vehicle interior space during the side-impact collision of the vehicle 1. Thus, when the trim engagement-plate portions 31 are displaced, particularly, upward, during the side-impact collision of the vehicle 1, the V-shaped engagement portions 36 can be brought into contact with respective edges of the corresponding bracket engagement-plate portions 21 to prevent the trim engagement-plate portions 31 from being further displaced relative to the corresponding bracket engagement-plate portions 21 in the upper or inward direction of the vehicle interior space. That is, during the side-impact collision of the vehicle 1, this structure makes it possible to more reliably prevent a displacement of the pillar trim 30 to a position where the pillar trim 30 obstructs the deployment of the airbag cushion 11.

Furthermore, in the first embodiment, the given distance "d" or the distance between the upper end of the pillar trim 30 and each proximal end 30a of the engagement members 35 is set at a given value or less to minimize the interference between the upper end of the pillar trim 30 and the bracket plate 20 during the side-impact collision against the vehicle 1. Thus, during the side-impact collision against the vehicle 1, the V-shaped engagement portions 36 can be reliably stopped by respective edge of the corresponding bracket engagement-plate portions 21 to prevent an excessive interference between the upper end of the pillar trim 30 and the bracket plate 20 so as to keep the bracket plate 20 from having an undesirable posture to an adequate deployment of the airbag cushion 11.

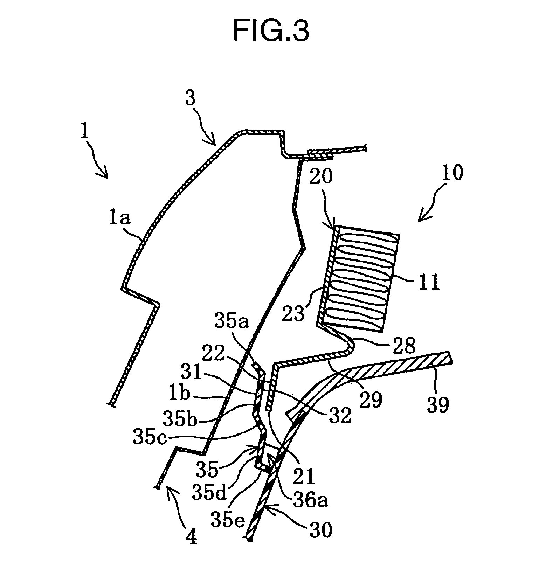

As shown in FIGS. 2 and 3, a rib 36a may be formed to connect between each of the engagement members 35 and an upper portion of the pillar trim 30 which define the V-shaped engagement portion 36, so as to reinforce the V-shaped engagement portion 36. This structure can be employed to effectively prevent the interference between the upper end of the pillar trim 30 and the turn-back portion of the bracket plate 20 during a side-impact collision of the vehicle 1.

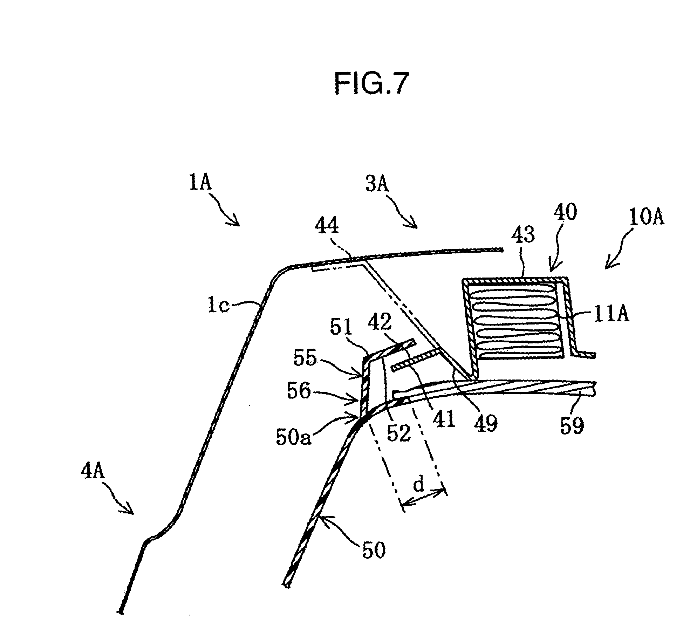

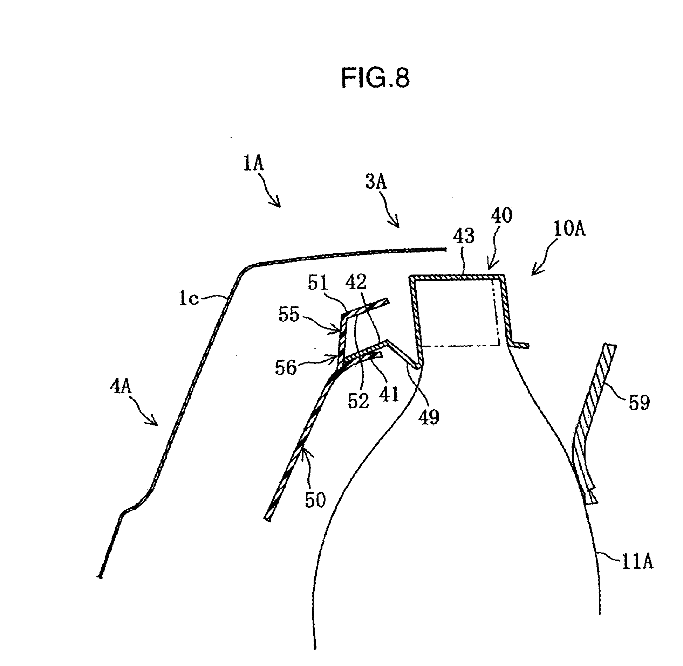

With reference to FIGS. 7 and 8, a curtain airbag arrangement structure according to a second embodiment of the present invention will be described below.

As shown in FIG. 7, in the curtain airbag arrangement structure according to the second embodiment, a curtain airbag 10A is disposed along a roof side rail 3A of a vehicle 1 A. The curtain airbag 10A comprises an airbag cushion 11 A placed along the roof side rail 3A in a uninflated and elongatedly folded state, and an inflator (not shown) fluidically connected to the airbag cushion 11 A.

The arrangement structure for the curtain airbag 10A is provided with a bracket plate 40 for attaching the curtain airbag 10A to a vehicle body inner panel 1 c of the roof side rail 3A. A trim engagement-plate portion 51 is formed in a pillar trim 50 for a center pillar 4A in the vicinity of an upper end of the pillar trim 50. The bracket plate 40 is formed with a bracket engagement-plate portion 41 having a bracket engagement surface 42 which is disposed on the side of the vehicle interior space (below) relative to the trim engagement surface 52 and in adjacent and opposed relation to the trim engagement surface 52 in a non-contact manner when the vehicle 1 A has no side-impact collision, and adapted to come into contact with the trim engagement surface 52 in conjunction with a displacement of the trim engagement-plate potion 51, primarily, in the inward direction of a vehicle interior space, during a side-impact collision against the vehicle 1 A.

The bracket plate 40 has a concaved portion 43 having an open bottom in section. The airbag cushion 11 A is received in the concaved portion 43 in the folded (uninflated) state, and fastened to the concaved portion 43 by an appropriate fastening means. The concave portion 43 is located above a roof garnish 59 and in the vicinity of an end of the roof garnish 59. Further, the bracket plate 40 has a longitudinally-extending outer lower edge on the outward side of the vehicle interior space, and a plurality of anchor portions 44 are integrally formed along the outer lower edge at appropriate intervals to extend obliquely upward. These anchor portions 44 are fixed to the vehicle body inner panel 1 c by bolts (not shown). The bracket plate 40 has a turn-back portion 49 extending obliquely upward in the outward direction of the vehicle interior space from the outer lower edge, and the bracket engagement-plate portion 41 having the bracket engagement surface 42 is integrally connected to the turn-back portion 49.

The pillar trim 50 is connected and fixedly fastened to a vehicle body inner panel 1 b of the center pillar 4A through a fastener (not shown) or the like to allow an upper end portion of the pillar trim 50 to be engaged with an end portion of the roof garnish 59 from the side of the vehicle interior space (from underneath). When the airbag cushion 11A is inflated, the inflation force acts to release the engagement between the upper end portion of the pillar trim 50 and the end portion of the roof garnish 59 to form an opening therebetween, and largely deform the roof garnish 59 in the inward direction of the vehicle interior space, to allow the airbag cushion 11 A to be deployed in the downward direction of the vehicle interior space.

The pillar trim 50 is integrally formed with an engagement member 55 extending toward the vehicle body inner panel 1 c (upward) from a given position 50a away from the upper end of the pillar trim 50 by a given distance "d" in the width direction of the vehicle 1 A or laterally, and in the outward direction of the vehicle 1 A, and the trim engagement-plate portion 51 is formed in this engagement member 55. Further, the engagement member 55 and an upper portion of the pillar trim 50 define a C-shaped engagement portion 56 which allows the trim engagement-plate potion 51 to be stopped by an edge of the bracket engagement-plate portion 41 when the trim engagement-plate potion 51 is displaced in the upward or inward direction of the vehicle interior space during the side-impact collision of the vehicle 1. The given distance "d" or the distance between the upper end of the pillar trim 50 and the proximal end 50a of the engagement members 55 is set at a given value or less to minimize the interference between the upper end of the pillar trim 50 and the turn-back portion 49 of the bracket plate 40 when the trim engagement-plate portion 51 is displaced in the upward or inward direction of the vehicle interior space during a side-impact collision of the vehicle 1 A.

Functions/effects of the above arrangement structure for the curtain airbag 10A will be described below.

In the normal state or when the vehicle 1A has no side-impact collision, the bracket engagement surface 42 of the bracket plate 40 is maintained at the position located on the side of the vehicle interior space relative to the trim engagement surface 52 of the pillar trim 50 and in adjacent and opposed relation to the trim engagement surface 52 in a non-contact manner. When the trim engagement-plate portion 51 is displaced in the upward or inward direction of the vehicle interior space in response to a side-impact collision against the vehicle 1 A, the trim engagement surface 52 can be brought into contact with the bracket engagement surface 42 to restrict a displacement of the trim engagement-plate portion 51 in the upward or inward direction of the vehicle interior space relative to the bracket engagement-plate portion 41.

In particular, if the trim engagement-plate portion 51 is displaced in the inward direction of the vehicle interior space, and the trim engagement surface 52 is brought into contact with the bracket engagement surface 42, the trim engagement-plate portion 51 is guided by the bracket engagement-plate portion 41. Then, as shown in FIG. 8, the C-shaped engagement portion 56 is finally stopped by the edge of the bracket engagement-plate portion 41 to preclude the trim engagement-plate portion 51 from being further displaced in the upward or inward direction of the vehicle interior space relative to the bracket engagement-plate portion 41. This makes it possible to prevent the pillar trim 50 from being largely displaced and superimposed on a surface of the roof garnish 59 on the side of the vehicle interior space, or to prevent a displacement of the pillar trim 50 to a position where the pillar trim 50 obstructs the deployment of the airbag cushion 11 A.

Thus, during the side-impact collision against the vehicle 1A, the airbag cushion 11A inflated by a supplied pressurized air is reliably deployed in the downward direction of the vehicle interior space while opening the engagement zone between the upper end portion of the pillar trim 50 and the end portion of the roof garnish 59 and largely deforming the roof garnish 59 in the inward direction of the vehicle interior space, to obtain a desired deployed state. The remaining functions/effects are approximately the same as those in the arrangement structure for the curtain airbag 10 according to the first embodiment.

The arrangement structures for curtain airbags 10, 10A according to the first and second embodiments may be changed or modified as follows.
(a) Each of the curtain airbags 10, 10A is disposed along only a roof side rail 3.
(b) The bracket engagement-plate portion or the trim engagement-plate portion is provided in a number of one, or three or more.
(c) The trim engagement-plate portion having the trim engagement surface is formed in a pillar trim of a pillar other than the center pillar (e.g. rear pillar, a B or C pillar of a van or wagon type automobile), and the bracket engagement-plate portion having the bracket engagement surface is formed in the bracket plate in conformity to the trim engagement-plate portion.
(d) Various other changes and modifications may be made without departing from the spirit and scope the present invention as set forth in appended claims, and the present invention may be applied to various types of automobiles or various types of vehicles other than automobiles.

In summary, the present invention provides a curtain airbag arrangement structure which includes an airbag cushion disposed along a roof side rail of a vehicle having a pillar, and adapted to be inflated in a curtain-like manner during a side-impact vehicle collision. The curtain airbag arrangement structure comprises a bracket plate for attaching the curtain airbag to a vehicle body panel, and a pillar trim formed with a trim engagement-plate potion in the vicinity of an upper end thereof. The trim engagement-plate potion has a trim engagement surface oriented toward a vehicle interior space in an orthogonal direction relative thereto. In the curtain airbag arrangement structure, the bracket plate is formed with a bracket engagement-plate portion having a bracket engagement surface which is disposed on the side of the vehicle interior space relative to the trim engagement surface and in adjacent and opposed relation to the trim engagement surface without contact with the trim engagement surface when the vehicle has no side-impact collision, and adapted to come into contact with the trim engagement surface in conjunction with a displacement of the trim engagement-plate potion during a side-impact vehicle collision.

According to the curtain airbag arrangement structure of the present invention, the curtain airbag is disposed along the roof side rail, and attached to the vehicle body panel through the bracket plate. The bracket plate is formed with the bracket engagement-plate portion in the vicinity of an upper end of the pillar, and the bracket engagement-plate portion has the bracket engagement surface oriented toward the outside of the vehicle in an orthogonal direction relative thereto. Further, the pillar trim is formed with the trim engagement-plate potion in the vicinity of the upper end thereof, and the trim engagement-plate potion has the trim engagement surface oriented toward the vehicle interior space in an orthogonal direction relative thereto.

Thus, even if the trim engagement-plate portion of the pillar trim is displaced in the upward or inward direction of the vehicle interior space during a side-impact vehicle collision, the trim engagement surface can be brought into contact with the bracket engagement surface to reliably prevent the trim engagement-plate portion from being further displaced.

In a vehicle assembling process, the bracket plate and the pillar trim are incorporated in the vehicle body in such a manner that the bracket engagement surface of the bracket engagement-plate portion is disposed on the side of the vehicle interior space relative to the trim engagement surface and in adjacent and opposed relation to the trim engagement surface in a non-contact manner. Thus, the trim and bracket engagement surfaces are kept in a non-contact state, and thereby abnormal noises will never occur during vehicle running.

In the event of a side-impact vehicle collision, the trim engagement-plate portion is supposedly displaced in the upward or inward direction of the vehicle interior space by an impact force applied to the pillar trim, and the trim engagement surface is brought into contact with the bracket engagement surface in conjunction with the above displacement. When the trim engagement surface is brought into contact with the bracket engagement surface during the side-impact vehicle collision, the trim engagement-plate portion is restricted in being displaced relative to the bracket engagement-plate portion. That is, the bracket engagement-plate portion suppresses a displacement of the pillar trim to a position where the pillar trim obstructs the deployment of the airbag cushion. Thus, during the side-impact vehicle collision, the airbag cushion is reliably deployed without interference with the pillar trim to obtain a desired deployed state.

As above, the curtain airbag arrangement structure of the present invention can suppress a displacement of the pillar trim to a position where the pillar trim obstructs the deployment of the airbag cushion during the side-impact vehicle collision, to allow the airbag cushion to be reliably deployed without interference with the pillar trim so as to obtain a desired deployed state and reliably absorb a shock to occupant's head, shoulder and lumbar regions by the airbag cushion. Further, in a normal state or when the vehicle has no side-impact collision, the trim and bracket engagement surfaces kept in a non-contact state makes it possible to prevent the occurrence of abnormal noises during vehicle running. In a vehicle assembling process, the bracket plate and the pillar trim can be incorporated in the vehicle body in a non-contact manner as descried above to provide enhanced assembling workability. In addition, the trim and bracket engagement-plate portions having no need for high accuracy in shape allow the curtain airbag arrangement structure to be simplified so as to achieve reduced production cost and enhanced productivity.

The curtain airbag arrangement structure of the present invention may be designed as follows.
(1) The pillar trim is integrally formed with an engagement member extending in the laterally outward direction of the vehicle from a given position of the pillar trim away from the upper end of the pillar trim by a given distance, and the trim engagement-plate potion is formed in the engagement member.
   According to this structure, a surface of the pillar on the side of the vehicle interior space can be reliably covered by the pillar trim, and the trim engagement-plate portion can be formed on a back or hidden surface of the pillar trim (on the side of the vehicle body panel) to achieve the aforementioned effects of the present invention.
(2) In the structure (1), the engagement member and the pillar trim are designed to define a V-shaped engagement portion which allows the trim engagement-plate potion to be brought into contact and engagement with an edge of the bracket engagement-plate portion when the trim engagement-plate potion is displaced in the upward or inward direction of the vehicle interior space during the side-impact vehicle collision.
   According to this structure, when the trim engagement-plate portion is displaced in the upward or inward direction of the vehicle interior space during the side-impact vehicle collision, the V-shaped engagement portion is brought into contact with the edge of the bracket engagement-plate portion, and restricted in displacement thereof. This makes it possible to reliably prevent the trim engagement-plate portion from being further displaced. That is, during the side-impact vehicle collision, this structure makes it possible to more reliably prevent a displacement of the pillar trim to a position where the pillar trim obstructs the deployment of the airbag cushion.
(3) In the structure (2), the given distance between the upper end of the pillar trim and the proximal end of the engagement member is determined to minimize the interference between the upper end of the pillar trim and the bracket plate during the side-impact vehicle collision.
   According to this structure, during the side-impact vehicle collision, the V-shaped engagement portion can be reliably stopped by the edge of the bracket engagement-plate portion to prevent an excessive interference between the upper end of the pillar trim and the bracket plate so as to keep the bracket plate from having an undesirable posture to an adequate deployment of the airbag cushion.
(4) The structure (3) is provided with a rib connecting between the trim engagement-plate potion and a portion of the pillar trim which define the V-shaped engagement portion.

According to this structure, the rib can provide increased rigidity in the trim engagement-plate portion and the portion of the pillar trim or in the V-shaped engagement portion to effectively keep the bracket plate from having an undesirable posture to an adequate deployment of the airbag cushion so as to reliably deploy the airbag cushion.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be considered as being included therein.

## Claims

1. An arrangement structure for a curtain airbag (10: 10A), which includes an airbag cushion (11: 11A) disposed along a roof side rail (3: 3A) of a vehicle having a pillar (2, 4, 5), and adapted to be inflated in a curtain-like manner during a side-impact vehicle collision, comprising:
a bracket plate (20: 40) for attaching said curtain airbag to a vehicle body panel (1 b: 1 c); and
a pillar trim (30) formed with a trim engagement-plate potion (31: 51) in the vicinity of an upper end thereof, said trim engagement-plate potion (31: 51) having a trim engagement surface (32: 52) oriented toward a vehicle interior space in an orthogonal direction relative thereto,
wherein said bracket plate (20: 40) is formed with a bracket engagement-plate portion (21: 41) having a bracket engagement surface (22: 42) which is disposed on the side of the vehicle interior space relative to said trim engagement surface (32: 52) and in adjacent and opposed relation to said trim engagement surface (32: 52) without contact with said trim engagement surface (32: 52) when the vehicle has no side-impact collision, and adapted to come into contact with said trim engagement surface (32: 52) in conjunction with a displacement of said trim engagement-plate potion (31: 51) during a side-impact vehicle collision.

2. The arrangement structure as defined in claim 1, wherein said pillar trim (30: 50) is integrally formed with an engagement member (35: 55) extending towards the body panel (1 b, 1 c) from a given position of said pillar trim (30: 50) away from the upper end of said pillar trim (30: 50) in a downward direction or in a laterally outward direction by a given distance (d), wherein said trim engagement-plate potion (31: 51) is formed in said engagement member (35:55).

3. The arrangement structure as defined in claim 2, wherein said engagement member (35) and said pillar trim (30) define a V-shaped engagement portion (36) which allows said trim engagement-plate potion (31: 51) to be brought into contact and engagement with an edge of said bracket engagement-plate portion (21: 41) when said trim engagement-plate potion (31: 51) is displaced in the upward or inward direction of the vehicle interior space during the side-impact vehicle collision.

4. The arrangement structure as defined in claim 3, wherein said given distance (d) between the upper end of said pillar trim (30: 50) and the proximal end (30a: 50a) of said engagement member (35, 55) is determined to minimize the interference between the upper end of said pillar trim (30: 50) and said bracket plate (20) during the side-impact vehicle collision.

5. The arrangement structure as defined in claim 4, which includes a rib (36a) connecting between said trim engagement-plate potion (31: 51) and a portion of said pillar trim (30) which define said V-shaped engagement portion (36).
